# EUROPEAN PATENT APPLICATION

(11) **EP 3 486 988 A1**
(43) Date of publication of application: **22.05.2019**
(21) Application number: 18205944.4
(22) Date of filing: 13.11.2018
(51) Int. Cl.: H01M 8/0612, H01M 8/0662, H01M 8/04014, H01M 8/04082

(54) **FUEL CELL MODULE AND FLUID SUPPLY DEVICE USED THEREFOR**

(30) Priority: 15.11.2017 JP 2017219680; 30.08.2018 JP 2018161702
(71) Applicant: TOTO LTD., Kokurakita-ku Kitakyushu-shi, Fukuoka 802-8601 (JP)
(72) Inventor: TSUBOI, Fumio, Kitakyushu-shi, Fukuoka 802-8601 (JP); MATSUO, Takuya, Kitakyushu-shi, Fukuoka 802-8601 (JP); KAWAKAMI, Akira, Kitakyushu-shi, Fukuoka 802-8601 (JP); TANAKA, Shuhei, Kitakyushu-shi, Fukuoka 802-8601 (JP); OMURA, Hajime, Kitakyushu-shi, Fukuoka 802-8601 (JP); HOSHIKO, Takuya, Kitakyushu-shi, Fukuoka 802-8601 (JP)
(74) Representative: Takeuchi, Maya

(57) **Abstract**

The present invention provides a fuel cell module (1) including a fuel cell stack (2) having a plurality of fuel cells (2a); a reformer (36) that generates fuel gas by reforming raw fuel gas; a combustor (38) that combusts remaining fuel gas and thereby that heats the reformer; and a housing (6) that houses the reformer and the combustor. The fuel cell stack is arranged outside the housing independently from the housing.

## Description

### BACKGROUND OF THE INVENTION

### 1. Field of the Invention

The present invention relates to fuel cell modules, and more particularly relates to a fuel cell module that generates electricity by a reaction of supplied fuel gas and oxidant gas, and a fluid supply device that is used for the fuel cell module.

### 2. Description of the Related Art

Japanese Unexamined Patent Application Publication No. 2017-50192 (hereinafter, Patent Document 1) describes a fuel cell module. The fuel cell module includes a fuel cell stack, a combustor, and a reformer that are housed in a casing. With the fuel cell module described in Patent Document 1, the fuel cell stack is a multilayer fuel cell stack in which a plurality of fuel cells are stacked. Each of the fuel cells has a cathode electrode and an anode electrode respectively provided on one and the other surfaces of a flat-plate electrolyte made of an oxide ion conductor. A cathode separator and an anode separator are arranged between the fuel cells. The cathode separator has an oxidant-gas flow path through which oxidant gas is supplied to the cathode electrode. The anode separator has a fuel-gas flow path through which fuel gas is supplied to the anode electrode.

The plurality of stacked fuel cells, cathode separators, and anode separators are sandwiched between an upper end plate and a lower end plate from both ends, and are pressed and fixed in a stacking direction. The lower end plate has an oxidant-gas inlet for supplying oxidant gas to each fuel cell, and a fuel-gas inlet for supplying fuel gas to each fuel cell. The lower end plate further has an oxidant-gas outlet for discharging oxidant gas which has been supplied to the cathode electrode of each fuel cell, which has not been used for generating electricity, and which has remained, and a fuel-gas outlet for discharging fuel gas which has been supplied to the anode electrode of each fuel cell, which has not been used for generating electricity, and which has remained.

The remaining fuel gas discharged from the fuel-gas outlet and the remaining oxidant gas discharged from the oxidant-gas outlet are guided to the combustor arranged in the casing and are combusted in the combustor. Combustion gas generated in the combustor is guided to a combustion-gas passage arranged in each of both side surfaces of the fuel cell stack, and is blown to both side surfaces of the fuel cell stack via fuel-gas lead-out ports. Thus, the temperature of the fuel cell stack rises to a temperature suitable for an electricity-generating reaction. With the fuel cell module described in Patent Document 1, the remaining fuel gas is combusted with the remaining oxidant gas in the combustor arranged in the casing, the fuel cell stack is directly heated with the generated combustion gas, the temperature of the fuel cell stack efficiently rises to a temperature suitable for an electricity-generating reaction, and the temperature is maintained.

With the fuel cell module described in Patent Document 1, however, the fuel cell stack in the casing is also heated with radiation heat radiated from the combustor that is overheated to a very high temperature in addition to the combustion gas generated in the combustor. Hence the temperature of the fuel cell stack likely becomes uneven and it is difficult to uniformly heat the fuel cell stack. When the temperature unevenness occurs in the fuel cell stack, electricity-generating efficiency is decreased, each fuel cell may be deteriorated, and service life of each fuel cell may be decreased.

Even when the fuel cell stack is heated with the radiation heat or the like radiated from the combustor or the like, the flow of the combustion gas may be set to cancel the temperature unevenness occurring due to the radiation heat or the like to bring the temperature of the fuel cell stack close to be uniform. However, with the fuel cell module that cancels the temperature unevenness with the flow of the combustion gas, if the arrangement of the combustor, reformer, fuel cell stack, and other member in the casing is changed, or if the dimensions and shapes thereof are changed, the flow of the combustion gas in the casing and the direction of the radiation heat may be changed, possibly resulting in occurrence of temperature unevenness. Owing to this, with the fuel cell module described in Patent Document 1, the flow of the combustion gas in the casing needs to be designed dedicatedly for the fuel cell stack and combustor housed in the casing. That is, even if the specifications of the combustor or the like housed in the casing are slightly changed, it is required to perform thermal simulation and form a prototype again to avoid occurrence of temperature unevenness in the fuel cell stack.

### SUMMARY OF THE INVENTION

The present invention is made to address such problems, and it is an object of the invention to provide a fuel cell module that can make the temperature of a fuel cell stack be sufficiently uniform and a fluid supply device that is used for the fuel cell module.

To address the above-described problems, an aspect of the invention provides a fuel cell module that generates electricity by a reaction of supplied fuel gas and oxidant gas. The fuel cell module includes a fuel cell stack having a plurality of fuel cells; a reformer that generates fuel gas containing hydrogen by reforming raw fuel gas, and that supplies the fuel gas to the fuel cell stack; a combustor that combusts remaining fuel gas which has not been used for generating electricity and which has remained in the fuel cell stack, and thereby that heats the reformer; and a housing having formed therein a space that houses the reformer and the combustor. The fuel cell stack is arranged outside the housing independently from the housing.

With the aspect of the invention having the above configuration, a fuel cell stack and a housing arranged independently from the fuel cell stack are provided, and a reformer and a combustor are housed in the housing. The reformer generates fuel gas by reforming raw fuel gas. The reformed fuel gas is supplied to the fuel cell stack. Remaining fuel gas which has not been used for generating electricity and which has remained in the fuel cell stack is discharged to the housing. The remaining fuel gas is combusted by the combustor in the housing and heats the reformer.

With the aspect of the invention having the above configuration, the fuel cell stack is arranged outside the housing independently from the housing. Thus, radiation heat radiated from the combustor or the like is blocked by the housing, and the fuel cell stack substantially receives and transmits heat only via a fluid flowing between the fuel cell stack and the housing. Thus, temperature unevenness does not occur in the fuel cell stack due to the radiation heat or the like radiated from the combustor or the like. Since the fuel cell stack substantially receives and transmits heat via the fluid, the temperature distribution of the fuel cell stack is determined by the temperature and flow rate of the fluid to be supplied. The temperature distribution of the fuel cell stack is not affected by a change in arrangement of the reformer, the combustor, and other member in the housing. Thus, the reformer, the combustor, and other member in the housing can be designed independently from the fuel cell stack. The degree of freedom of design for the reformer, the combustor, and other member can be increased. Since the housing that houses the reformer, the combustor, and other member is independent from the fuel cell stack, a single model of housing can be widely used for any of various fuel cell stacks, and the manufacturing cost can be decreased by mass production.

According to the aspect of the invention, preferably, the fuel cell stack is provided separately from the housing.

With the aspect of the invention having the above configuration, since the fuel cell stack is provided separately from the housing, the heat which may be directly transmitted from the housing to the fuel cell stack by heat transfer can be reduced. Thus, the influence of a change in arrangement of the reformer, the combustor, and other member in the housing given to the temperature distribution of the fuel cell stack can be further reduced.

According to the aspect of the invention, preferably, the fuel cell stack and the housing are connected to each other by using a fuel supply passage through which the fuel gas reformed by the reformer is supplied to the fuel cell stack, and a fuel discharge passage through which the remaining fuel gas which has not been used for generating electricity and which has remained in the fuel cell stack is discharged to the combustor.

With the aspect of the invention having the above configuration, the reformed fuel gas can be supplied to the fuel cell stack via the fuel supply passage, and the remaining fuel gas which has not been used for generating electricity and which has remained can be discharged to the combustor via the fuel discharge passage.

According to the aspect of the invention, preferably, the fuel supply passage and the fuel discharge passage are defined by pipes.

With the aspect of the invention having the above configuration, the reformed fuel gas and the remaining fuel gas can be respectively supplied to the fuel cell stack and the combustor via the pipes. With the aspect of the invention having the above configuration, since the fuel cell stack and the housing are connected to each other via the pipes, the fuel cell stack and the housing can be easily disassembled from each other.

According to the aspect of the invention, preferably, a heat insulating material that thermally isolates the fuel cell stack from the housing is arranged in a space between the fuel cell stack and the housing.

With the aspect of the invention having the above configuration, since the heat insulating material is arranged in the space between the fuel cell stack and the housing, the heat directly transmitted between the housing and the fuel cell stack can be further reduced. Thus, the influence of a change in arrangement of the reformer, the combustor, and other member in the housing given to the temperature distribution of the fuel cell stack can be further reduced.

According to the aspect of the invention, preferably, the fuel cell stack is arranged to face a surface of the housing.

With the aspect of the invention having the above configuration, since the fuel cell stack is arranged to face a surface of the housing, even when heat is directly transmitted from the housing to the fuel cell stack, temperature unevenness unlikely occurs in the fuel cell stack, and an adverse effect due to the heat received from the housing can be further reduced.

According to the aspect of the invention, preferably, the heat insulating material is provided so as to surround each of the fuel cell stack and the housing, and the fuel supply passage and the fuel discharge passage penetrate through the heat insulating material and extend between the fuel cell stack and the housing.

With the aspect of the invention having the above configuration, since the fuel cell stack and the housing are completely thermally insulated from each other by the heat insulating material, the heat transfer and radiation can be blocked at a high level except for an inflow of heat due to the gas passing through the passages penetrating through the heat insulating material.

According to the aspect of the invention, preferably, the fuel cell stack and the housing are arranged next to each other in a vertical direction.

With the aspect of the invention having the above configuration, since the fuel cell stack and the housing are arranged next to each other in the vertical direction, even when the heat in the housing leaks through the heat insulating material, heating only one side of the fuel cell stack is avoided, and the temperature distribution of the fuel cell stack can be further uniform.

According to the aspect of the invention, preferably, the housing is arranged above the fuel cell stack.

The fuel cell stack typically has a larger weight than the housing that houses the reformer and the combustor. With the aspect of the invention having the above configuration, since the housing is arranged above the fuel cell stack, the fuel cell module is more stable and the upper housing can be easily supported as compared with a case where the fuel cell stack is arranged above the housing.

According to the aspect of the invention, preferably, the fuel supply passage and the fuel discharge passage extend in a space between the fuel cell stack and the housing arranged next to each other.

With the aspect of the invention having the above configuration, since the fuel supply passage and the fuel discharge passage extend in the space between the fuel cell stack and the housing, the fuel supply passage and the fuel discharge passage can be provided without an increase in occupancy floor area. Even when the connection positions of the fuel supply passage and the fuel discharge passage to the fuel cell stack differ from those to the housing in top view, the passages can be connected by bending the passages in the space between the fuel cell stack and the housing. Thus, any of various fuel cell stacks with different dimensions and shapes can be connected to a single model of housing.

Preferably, the aspect of the invention further includes an oxidant-gas supply passage through which oxidant gas is supplied to the fuel cell stack; and an oxidant-gas discharge passage through which oxidant gas which has not been used for generating electricity and which has remained in the fuel cell stack is discharged to the housing. The housing is coupled to the fuel cell stack by using only the fuel supply passage, the fuel discharge passage, the oxidant-gas supply passage, and the oxidant-gas discharge passage.

With the aspect of the invention having the above configuration, since the housing is coupled to the fuel cell stack only by the fuel supply passage, the fuel discharge passage, the oxidant-gas supply passage, and the oxidant-gas discharge passage, a dedicated support member for supporting the housing is not required, and heat transfer between the fuel cell stack and the housing via the support member can be prevented. Since a fluid flows in a corresponding passage, the temperature of the passage substantially depends on the temperature of the fluid flowing therein. Hence, dissipation of heat via the passage by heat transfer can be restricted.

According to the aspect of the invention, preferably, at least one of the fuel supply passage, the fuel discharge passage, the oxidant-gas supply passage, and the oxidant-gas discharge passage is removably coupled to the housing or the fuel cell stack.

With the aspect of the invention having the above configuration, since at least one of the fuel supply passage, the fuel discharge passage, the oxidant-gas supply passage, and the oxidant-gas discharge passage is removably coupled, when one of the housing and the fuel cell stack has a problem, maintenance or replacement of the one with a problem can be independently performed. That is, since the fuel supply passage, the fuel discharge passage, the oxidant-gas supply passage, and the oxidant-gas discharge passage are provided with flanges or unions, the passages can be easily removably coupled.

According to the aspect of the invention, preferably, the fuel cell stack is a flat-plate cell stack in which a plurality of flat-plate fuel cells are stacked.

A flat-plate cell stack typically has a hermetically sealed structure, and a flow path through which fuel gas flows is formed in the cell stack. Hence, merely by connecting the flow path with the passages, a fluid can be easily supplied to and discharged from the housing. Thus, the structure of the fuel cell module can be simplified.

Another aspect of the invention also provides a fluid supply device for supplying fuel gas obtained by reforming raw fuel gas and heated oxidant gas for electricity generation to a fuel cell stack. The fluid supply device includes a reformer that generates fuel gas containing hydrogen by reforming raw fuel gas; a combustor that combusts remaining fuel gas which has not been used for generating electricity and which has remained in the fuel cell stack, and thereby that heats the reformer; a housing having formed therein a hermetically sealed space that houses the reformer and the combustor; and a heat insulating material that thermally isolates the fuel cell stack from the housing. The fuel gas generated by the reformer is supplied to the fuel cell stack via a fuel supply passage extending across the heat insulating material, and the remaining fuel gas is discharged to the housing via a fuel discharge passage extending across the heat insulating material.

In the fluid supply device according to the aspect of the invention, preferably, the fuel supply passage and the fuel discharge passage are connected to one side of the housing.

With the fuel cell module and the fluid supply device that is used for the fuel cell module according to the aspects of the invention, the temperature of the fuel cell stack can be sufficiently uniform.

### BRIEF DESCRIPTION OF THE DRAWINGS

Fig. 1 illustrates a general configuration of the entirety of a fuel cell module according to an embodiment of the invention;
Fig. 2 is a perspective view of the entirety of a fuel cell module according to an example of the invention;
Fig. 3 is a cross-sectional view of the entirety of the fuel cell module according to the example of the invention;
Fig. 4 is a cross-sectional view taken along line IV-IV in Fig. 3 of the fuel cell module according to the example of the invention;
Fig. 5 is a cross-sectional view taken along line V-V in Fig. 3 of the fuel cell module according to the example of the invention; and
Fig. 6 is a cross-sectional view taken along line VI-VI in Fig. 3 of the fuel cell module according to the example of the invention.

### DESCRIPTION OF THE PREFERRED EMBODIMENTS

A preferred embodiment of the invention is described below with reference to the accompanying drawings.

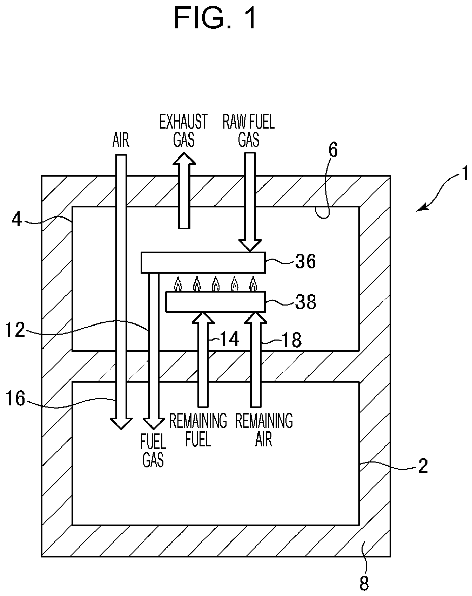

Fig. 1 illustrates a general configuration of the entirety of a fuel cell module according to an embodiment of the invention.

### General Configuration and Operation of Fuel Cell Module

As illustrated in Fig. 1, a fuel cell module 1 according to an embodiment of the invention includes a fuel cell stack 2 that makes an electricity-generating reaction, and a fluid supply device 4 that supplies fuel gas which is obtained by reforming raw fuel gas and air which is heated oxidant gas to the fuel cell stack 2.

The fluid supply device 4 includes a housing 6. The housing 6 is arranged next to the fuel cell stack 2 or above the fuel cell stack 2 in the vertical direction. A heat insulating material 8 surrounds the fuel cell stack 2 and the housing 6 and is also provided between the fuel cell stack 2 and the housing 6. Thus, the fuel cell stack 2 is thermally isolated from the housing 6 (the fluid supply device 4). The heat insulating material 8 surrounding the fuel cell stack 2 and the housing 6 defines the outermost surfaces of the fuel cell module 1. The heat insulating material 8 may be provided with or may not be provided with a metal container or the like that covers the outer side of the heat insulating material 8. A reformer 36 and a combustor 38 are housed in a space hermetically sealed by the housing 6.

Fig. 1 illustrates the heat insulating material 8 as one continuous member; however, the heat insulating material 8 may include a plurality of heat insulating materials. For example, the heat insulating material surrounding the fuel cell stack 2 and the housing 6 may differ from the heat insulating material provided between the fuel cell stack 2 and the housing 6.

Further, the heat insulating material may use a combination of a plurality of members having different heat insulating performances. Methods of overlapping and arranging the members can be appropriately designed in accordance with desirable specifications.

The heat insulating material provided between the fuel cell stack 2 and the housing 6 does not have to completely cover a region between the fuel cell stack 2 and the housing 6. An advantageous effect can be attained as far as the heat insulating material is at least partly arranged between the fuel cell stack 2 and the housing 6 where needed.

The reformer 36 reforms raw fuel gas supplied from the outside of the fluid supply device 4 by steam reforming, and generates fuel gas rich in hydrogen. The fuel gas generated in the reformer 36 is sent to the fuel cell stack 2, and used for generating electricity in the fuel cell stack 2. The fuel gas is supplied to the fuel cell stack 2 via a fuel supply passage 12 extending between the housing 6 of the fluid supply device 4 and the fuel cell stack 2. In this case, since the housing 6 of the fluid supply device 4 is surrounded by the heat insulating material 8, the fuel supply passage 12 through which the fuel gas is supplied penetrates through the heat insulating material 8 and extends to the fuel cell stack 2.

The combustor 38 combusts remaining fuel which has not been used for generating electricity and which has remained in the fuel cell stack 2. The fuel which has not been used for generating electricity and which has remained in the fuel cell stack 2 is discharged to the housing 6 via a fuel discharge passage 14 extending between the housing 6 of the fluid supply device 4 and the fuel cell stack 2. The fuel discharge passage 14 penetrates through the heat insulating material 8 that surrounds the housing 6 of the fluid supply device 4 and extends from the fuel cell stack 2 to the fluid supply device 4. The remaining fuel discharged to the housing 6 is combusted by the combustor 38 housed in the housing 6, and heats the reformer 36 arranged above the combustor 38. Thus, a reforming catalyst (not illustrated) in the reformer 36 is heated to a temperature suitable for steam reforming.

Air which is oxidant gas for electricity generation is supplied from the outside to the fluid supply device 4. The air is heated with combustion heat of the combustor 38, and the heated air at a high temperature is supplied to the fuel cell stack 2. The fuel cell stack 2 is heated to a temperature suitable for an electricity-generating reaction mainly with the heat of the air for electricity generation heated to the high temperature. The air for electricity generation heated in the fluid supply device 4 is supplied to the fuel cell stack 2 via an oxidant-gas supply passage 16 extending from the housing 6. The oxidant-gas supply passage 16 penetrates through the heat insulating material 8 that surrounds the housing 6 of the fluid supply device 4 and extends from the fluid supply device 4 to the fuel cell stack 2.

The air which has been supplied to the fuel cell stack 2, which has not been used for generating electricity, and which has remained is discharged to the housing 6 via an oxidant-gas discharge passage 18. The oxidant-gas discharge passage 18 penetrates through the heat insulating material 8 that surrounds the housing 6 of the fluid supply device 4 and extends from the fuel cell stack 2 to the fluid supply device 4. The remaining air discharged to the housing 6 is used for combustion in the combustor 38 in the housing 6. The combustion gas generated by the combustion is discharged as exhaust gas from the fluid supply device 4.

With the fuel cell module 1 according to the embodiment of the invention, the remaining fuel gas is combusted with the remaining air in the combustor 38 of the fluid supply device 4, and the reformer 36 is heated with the combustion heat. The reformer 36 and the combustor 38 are housed in the housing 6 of the fluid supply device 4. The housing 6 is thermally isolated from the fuel cell stack 2 by the heat insulating material 8. Thus, the fuel cell stack 2 is substantially not directly heated with the combustion heat of the remaining fuel. That is, heat is transferred between the fluid supply device 4 (the housing 6) and the fuel cell stack 2 substantially by using only a fluid flowing therebetween. The fuel cell stack 2 is not directly heated with radiation heat or the like radiated from the combustor 38 or the like. Thus, the temperature of the fuel cell stack 2 can be substantially determined only by the flow rate and temperature of the fluid that is supplied to the fuel cell stack 2.

Note that a device that is used together with the fuel cell module may be a vaporizer that generates water vapor for steam reforming, a desulfurizer that removes a sulfur component contained in raw fuel gas, and a combustion catalyst that removes carbon monoxide or the like contained in exhaust gas. These devices may be housed in the housing. Alternatively, these devices may be arranged outside the housing, may be covered with the heat insulating material, and may be heated with the heat of the exhaust gas discharged from the housing.

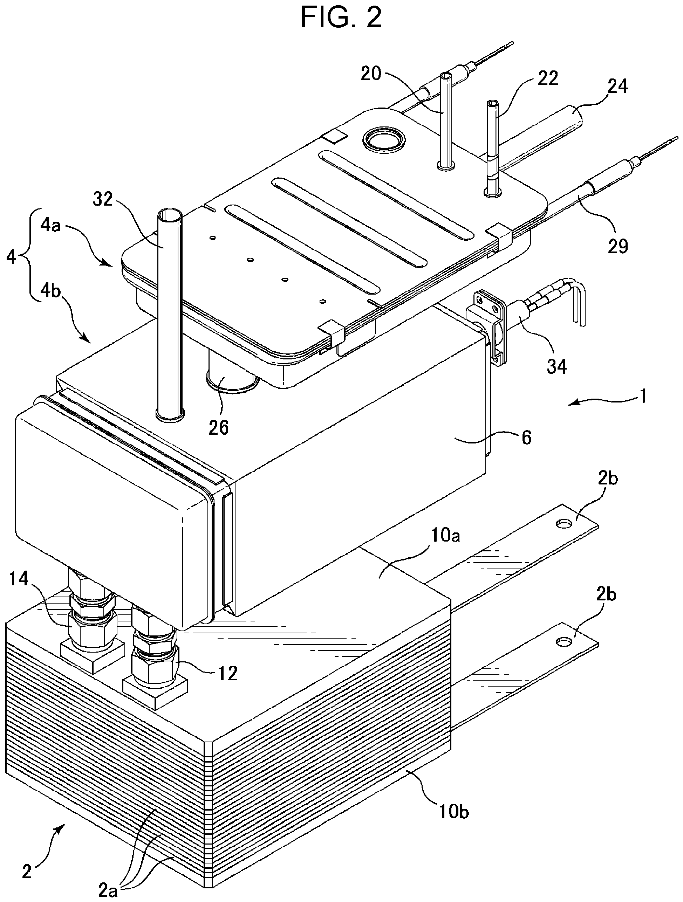

A configuration of a fuel cell module according to an example of the invention is described below with reference to Figs. 2 to 6.

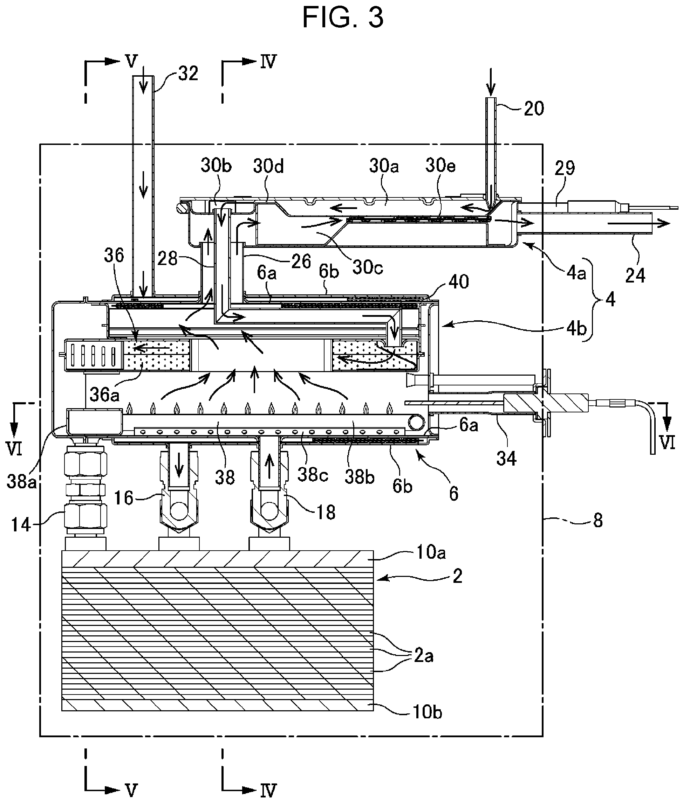

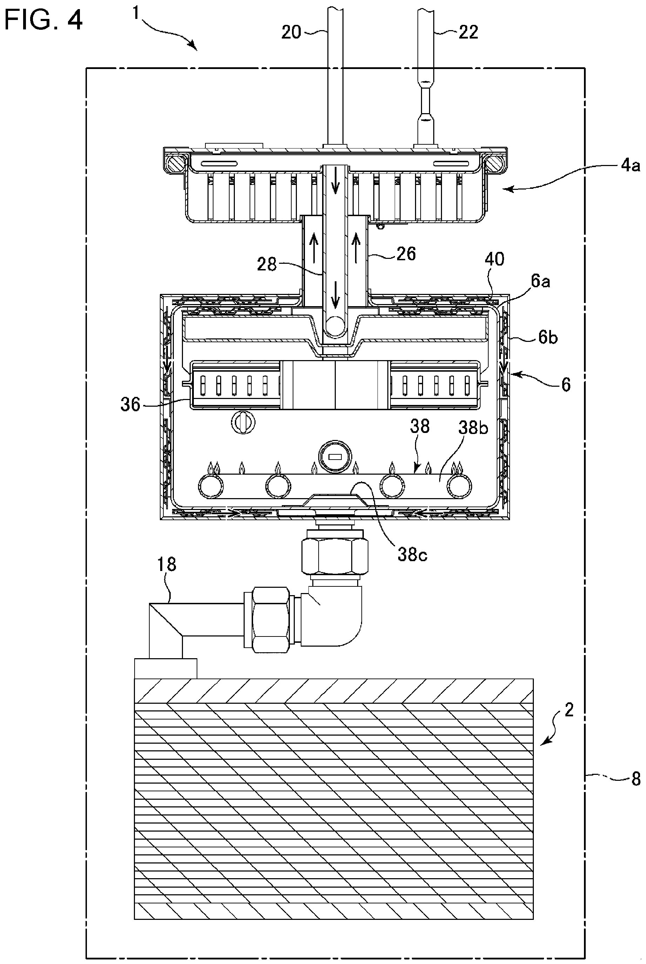

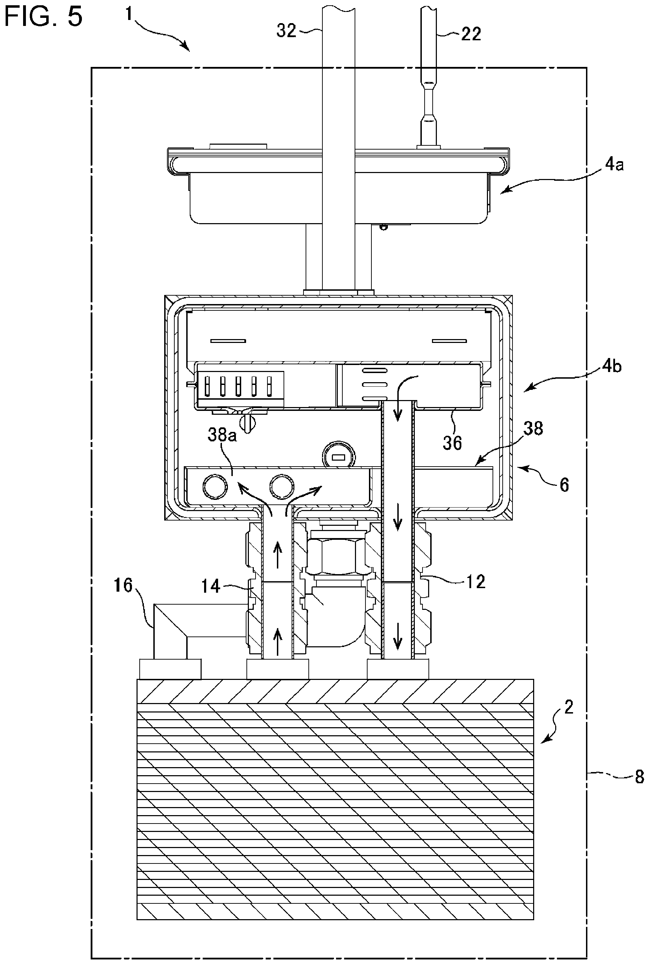

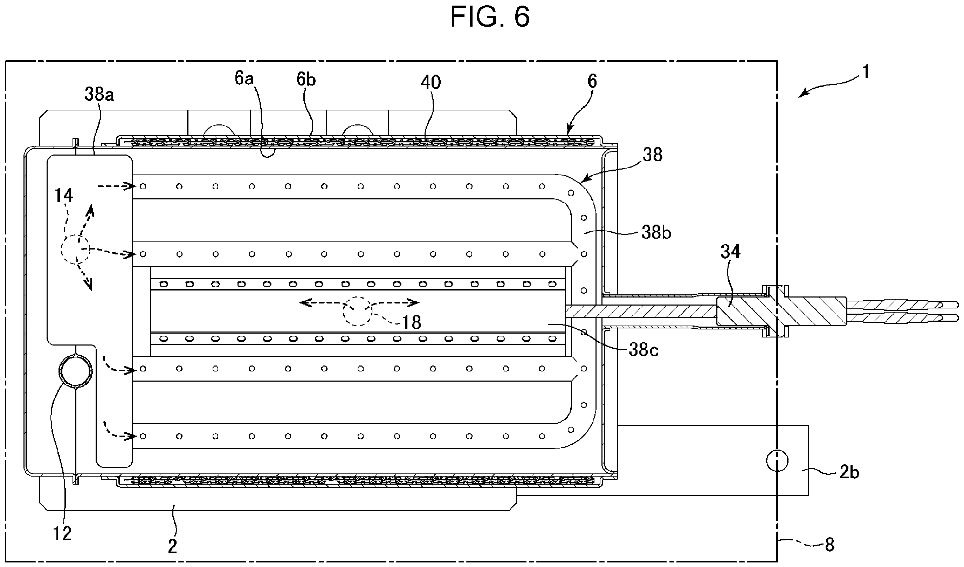

Fig. 2 is a perspective view illustrating the entirety of a fuel cell module according to the example of the invention. Fig. 3 is a cross-sectional view of the entirety of the fuel cell module according to the example of the invention. Fig. 4 is a cross-sectional view taken along line IV-IV in Fig. 3. Fig. 5 is a cross-sectional view taken along line V-V in Fig. 3. Fig. 6 is a cross-sectional view taken along line VI-VI in Fig. 3. Note that Fig. 2 omits illustration of the heat insulating material surrounding the fuel cell stack and other member.

### General Configuration of Fuel Cell Module

As illustrated in Fig. 2, a fuel cell module 1 according to an example of the invention includes a fuel cell stack 2 that makes an electricity-generating reaction, and a fluid supply device 4 that supplies fuel gas which is obtained by reforming raw fuel gas and air which is heated oxidant gas to the fuel cell stack 2. The fluid supply device 4 includes a vaporizer 4a and a reformer heater 4b. The vaporizer 4a generates water vapor by vaporizing supplied water, and mixes the water vapor with raw fuel gas. The reformer heater 4b generates fuel gas containing hydrogen by reforming the mixed gas supplied from the vaporizer 4a by steam reforming, and supplies the generated fuel gas to the fuel cell stack 2.

The reformer heater 4b is substantially covered with a rectangular-parallelepiped metal housing 6. The fuel cell stack 2, the housing 6 of the reformer heater 4b arranged above the fuel cell stack 2, and the vaporizer 4a are arranged next to one another in the vertical direction. The fuel cell stack 2, the housing 6, and the vaporizer 4a each are surrounded by a heat insulating material 8. The fuel cell stack 2 is thermally isolated from the housing 6 and the vaporizer 4a.

### Configuration of Fuel Cell Stack

As illustrated in Figs. 2 and 3, according to the example, the fuel cell stack 2 is a flat-plate cell stack, in which a plurality of rectangular flat-plate fuel cells 2a are stacked. That is, each fuel cell 2a is formed by providing electrodes of a fuel electrode and an air electrode (oxidant gas electrode) respectively on one and the other surfaces of a flat-plate electrolyte made of an oxide ion conductor. Separators are arranged between the fuel cells 2a. (The electrodes and separators are not illustrated.) A top end plate 10a is arranged at an upper end of the plurality of stacked fuel cells 2a. A bottom end plate 10b is arranged at a lower end of the stacked fuel cells 2a. In the fuel cell stack 2 obtained by stacking the plurality of fuel cells 2a in this way, a fuel-gas supply passage (not illustrated) for supplying fuel gas to each fuel cell 2a, and an oxidant-gas supply passage (not illustrated) for supplying air which is oxidant gas to each fuel cell 2a are formed. Moreover, two bus bars 2b extend from an upper region and a bottom region of the fuel cell stack 2 to obtain generated electric power.

Furthermore, a fuel supply passage 12, a fuel discharge passage 14, an oxidant-gas supply passage 16, and an oxidant-gas discharge passage 18 are coupled to the top end plate 10a of the fuel cell stack 2. The four passages extend in a space between the fuel cell stack 2 and the housing 6 of the reformer heater 4b. That is, the passages extend upward from an upper surface of the top end plate 10a of the fuel cell stack 2 and are coupled to a bottom surface that is a single surface of the housing 6 arranged above the fuel cell stack 2. Hence, the fuel supply passage 12, the fuel discharge passage 14, the oxidant-gas supply passage 16, and the oxidant-gas discharge passage 18 extend through the heat insulating material 8 arranged between the fuel cell stack 2 and the housing 6. Note that the housing 6 of the reformer heater 4b is coupled to and supported by the fuel cell stack 2 by using only the four passages (the fuel supply passage 12, the fuel discharge passage 14, the oxidant-gas supply passage 16, and the oxidant-gas discharge passage 18).

The fuel supply passage 12 and the fuel discharge passage 14 are attached at positions next to each other near a short side of the top end plate 10a, and linearly extend upward in the vertical direction. Fuel gas reformed in the reformer heater 4b is supplied to the fuel cell stack 2 via the fuel supply passage 12, passes through the fuel-gas supply passage (not illustrated) in the fuel cell stack 2, and is distributed to each fuel cell 2a. The remaining fuel gas which has not been used for generating electricity and which has remained in each fuel cell 2a is collected through a fuel-gas discharge passage (not illustrated) in the fuel cell stack 2, and is discharged to the reformer heater 4b via the fuel discharge passage 14 attached to the top end plate 10a.

As illustrated in Figs. 3 and 4, the oxidant-gas supply passage 16 and the oxidant-gas discharge passage 18 are attached at positions next to each other near a long side of the top end plate 10a, extend vertically upward, then are bent inward at 90 degrees, extend in the horizontal direction, are further bent at 90 degrees, and extend vertically upward. Upper ends of the oxidant-gas supply passage 16 and the oxidant-gas discharge passage 18 are connected to the bottom surface of the housing 6 of the reformer heater 4b at positions next to each other along the central axis in the longitudinal direction of the bottom surface.

The air heated by the reformer heater 4b is supplied to the fuel cell stack 2 via the oxidant-gas supply passage 16, passes through an oxidant-gas supply passage (not illustrated) in the fuel cell stack 2, and is distributed to each fuel cell 2a. The remaining air which has not been used for generating electricity and which has remained in each fuel cell 2a is collected through an oxidant-gas discharge passage (not illustrated) in the fuel cell stack 2, and is discharged to the reformer heater 4b via the oxidant-gas discharge passage 18 attached to the top end plate 10a.

While the positions at which the oxidant-gas supply passage 16 and the oxidant-gas discharge passage 18 are connected to the bottom surface of the housing 6 differ from the positions at which the passages are connected to the fuel cell stack 2 in top view as described above, the fuel cell stack 2 and the housing 6 can be connected to each other by bending the passages in the space between the housing 6 and the fuel cell stack 2. Thus, various fuel cell stacks 2 can be connected to a single model of housing 6 (fluid supply device 4) by appropriately changing passages for connection. Also, since the passages extend in the space between the housing 6 and the fuel cell stack 2, the fuel supply passage 12, the fuel discharge passage 14, the oxidant-gas supply passage 16, and the oxidant-gas discharge passage 18 can be provided without an increase in occupancy floor area.

Furthermore, the fuel supply passage 12, the fuel discharge passage 14, the oxidant-gas supply passage 16, and the oxidant-gas discharge passage 18 each have a coupling structure using screws for piping. The passages can be disconnected by loosening nuts for coupling. As described above, the fuel supply passage 12, the fuel discharge passage 14, the oxidant-gas supply passage 16, and the oxidant-gas discharge passage 18 are removably coupled to the housing 6 of the reformer heater 4b. Alternatively, some or all of the four passages may extend from the bottom surface of the housing 6, and may be removably coupled to the fuel cell stack 2.

### Configuration of Vaporizer

A structure of the vaporizer 4a is described below with reference to Figs. 2 and 3. As illustrated in Fig. 2, a water supply pipe 20 for supplying water, a raw-fuel-gas supply pipe 22 for supplying raw fuel gas, and an exhaust-gas discharge pipe 24 for discharging exhaust gas are connected to the vaporizer 4a. The housing 6 of the reformer heater 4b and the vaporizer 4a located outside the housing 6 are connected to each other via a pipe. The pipe has a double-pipe structure including an exhaust-gas pipe 26 for supplying the exhaust gas from the reformer heater 4b to the vaporizer 4a and a mixed-gas duct 28 arranged inside the exhaust-gas pipe 26 (Fig. 3). The mixed-gas duct 28 introduces the mixed gas in which the water vapor generated in the vaporizer 4a and the raw fuel gas supplied to the vaporizer 4a are mixed, into the reformer heater 4b. An electric heater 29 for supplementarily heating the vaporizer 4a is wound around three peripheral side surfaces of the vaporizer 4a.

As illustrated in Fig. 3, the vaporizer 4a is formed of a metal plate in a rectangular-parallelepiped box shape, and has formed therein a vaporizing chamber 30a, a mixing chamber 30b, and an exhaust-gas chamber 30c. The vaporizing chamber 30a is a thin space formed directly below a ceiling surface of the vaporizer 4a. The water and the raw fuel gas respectively supplied from the water supply pipe 20 and the raw-fuel-gas supply pipe 22 connected to the ceiling surface of the vaporizer 4a flow into the vaporizing chamber 30a.

The mixing chamber 30b is formed as a space communicating with the downstream side of the vaporizing chamber 30a via a narrow passage 30d. The water vapor generated in the vaporizing chamber 30a and the raw fuel gas supplied into the vaporizing chamber 30a pass through the narrow passage 30d, flow into the mixing chamber 30b, and hence are mixed. The mixed-gas duct 28 is connected to a bottom surface of the mixing chamber 30b. The water vapor and the raw fuel gas mixed in the mixing chamber 30b pass through the mixed-gas duct 28, and are introduced into the reformer heater 4b.

The exhaust-gas chamber 30c is a space provided in a lower region of the vaporizer 4a. The exhaust gas flows into the exhaust-gas chamber 30c via the exhaust-gas pipe 26 connected to a bottom surface of the vaporizer 4a. The exhaust gas flowing into the exhaust-gas chamber 30c heats a floor surface of the vaporizing chamber 30a provided above the exhaust-gas chamber 30c, and is discharged from the exhaust-gas discharge pipe 24 connected to an end portion of a side surface of the vaporizer 4a. The water supplied to the vaporizing chamber 30a is vaporized because the floor surface of the vaporizing chamber 30a is heated with the exhaust gas flowing in the exhaust-gas chamber 30c.

The downstream side of the exhaust-gas chamber 30c is formed thin so that the exhaust gas flowing thereinto flows along the floor surface of the vaporizing chamber 30a (the ceiling surface of the exhaust-gas chamber 30c). In the thin space, a heat transfer fin 30e is arranged to efficiently transfer the heat of the exhaust gas flowing in the exhaust-gas chamber 30c to the floor surface of the vaporizing chamber 30a. The exhaust gas flowing into the exhaust-gas chamber 30c from the exhaust-gas pipe 26 connected to one end of the exhaust-gas chamber 30c flows toward the exhaust-gas discharge pipe 24 connected to the other end of the exhaust-gas chamber 30c (from left to right in Fig. 3). The water supplied from the water supply pipe 20 connected to an end portion of the vaporizing chamber 30a near the exhaust-gas discharge pipe 24 flows toward the other end portion (from right to left in Fig. 3) while being vaporized in the vaporizing chamber 30a. Since the water vapor and the exhaust gas flowing in the vaporizer 4a flow in the opposite directions, counterflow heat exchange is performed between the water vapor and the exhaust gas, and thus heat is efficiently exchanged.

### Configuration of Reformer Heater

A structure of the reformer heater 4b is described below with reference to Figs. 2 and 6.

As illustrated in Fig. 2, the reformer heater 4b is formed in a rectangular-parallelepiped box shape surrounded by the metal housing 6. An air supply pipe 32 for supplying air which is oxidant gas for electricity generation is connected to an upper surface of the reformer heater 4b. As described above, the double pipe of the exhaust-gas pipe 26 and the mixed-gas duct 28 (Fig. 3) are connected to an upper surface of the housing 6; and the fuel supply passage 12, the fuel discharge passage 14, the oxidant-gas supply passage 16, and the oxidant-gas discharge passage 18 are connected to the bottom surface of the housing 6. Also, an ignition ceramic heater 34 is attached to one side surface of the housing 6.

The reformer heater 4b generates fuel gas by reforming the mixed gas introduced from the mixed-gas duct 28 by steam reforming; supplies the fuel gas to the fuel cell stack 2 via the fuel supply passage 12; heats the air introduced into the reformer heater 4b via the air supply pipe 32; and supplies the heated air to the fuel cell stack 2 via the oxidant-gas supply passage 16. The remaining fuel gas and the remaining air (remaining oxidant gas) which have not been used for generating electricity and have remained in the fuel cell stack 2 are discharged to the reformer heater 4b respectively via the fuel discharge passage 14 and the oxidant-gas discharge passage 18. The remaining fuel gas and the remaining air discharged via the fuel discharge passage 14 and the oxidant-gas discharge passage 18 are combusted in the reformer heater 4b, and the air introduced from the air supply pipe 32 is heated with the combustion heat. The combustion gas generated by the combustion is introduced as exhaust gas to the vaporizer 4a via the exhaust-gas pipe 26.

An internal structure of the reformer heater 4b is described below with reference to Figs. 3 and 6.

As illustrated in Fig. 3, a hermetically sealed space for housing the reformer 36 and the combustor 38 is formed in the housing 6 that constitutes the reformer heater 4b.

A reformer 36 is a metal annular container having a rectangular cross section and provided with a rectangular opening at the center in top view. The mixed-gas duct 28 for introducing the mixed gas is connected to one end portion of the reformer 36, and the fuel supply passage 12 that causes the reformed fuel gas to flow out from the reformer 36 is connected to the other end portion (Fig. 5). The mixed-gas duct 28 extending from the vaporizer 4a into the housing 6 is bent at 90 degrees in the housing 6, extends in the horizontal direction, then is bent at 90 degrees vertically downward, and is connected to a ceiling surface of the reformer 36. The fuel supply passage 12 is connected to a bottom surface of the reformer 36 at an end portion opposite to the mixed-gas duct 28, penetrates through the bottom surface of the housing 6, extends vertically downward, and is connected to the fuel cell stack 2. The inside of the reformer 36 is filled with a reforming catalyst 36a. The mixed gas of the raw fuel gas and the water vapor flowing into the reformer 36 from the mixed-gas duct 28 comes into contact with the reforming catalyst 36a and hence is reformed by steam reforming. Thus, fuel gas rich in hydrogen gas is generated. The fuel gas reformed by steam reforming in the reformer 36 flows into the fuel supply passage 12, and is supplied to the fuel cell stack 2.

The combustor 38 is provided inside a bottom wall surface of the housing 6 arranged next to the fuel cell stack 2. The combustor 38 combusts the remaining fuel gas discharged via the fuel discharge passage 14 by using the remaining air discharged via the oxidant-gas discharge passage 18.

As illustrated in Fig. 6, the combustor 38 includes a remaining fuel-gas manifold 38a, a remaining fuel-gas distribution pipe 38b connected to the remaining fuel-gas manifold 38a, and a remaining air dispersion plate 38c that disperses remaining air into the housing 6.

The remaining fuel-gas manifold 38a is a box-shaped member attached to the bottom wall surface of one end portion of the housing 6. The remaining fuel gas from the fuel discharge passage 14 connected to the bottom wall surface of the housing 6 flows into the remaining fuel-gas manifold 38a.

The remaining fuel-gas distribution pipe 38b is defined by pipes each having a circular cross section. The pipes include four pipes extending in parallel to one another in the longitudinal direction of the housing 6 from the remaining fuel-gas manifold 38a. The four pipes are joined by a pipe extending in the transverse direction at the other end portion of the housing 6. Upper surfaces of the pipes that define the remaining fuel-gas distribution pipe 38b have multiple pores through which the remaining fuel gas flowing from the remaining fuel-gas manifold 38a into the remaining fuel-gas distribution pipe 38b is ejected.

The remaining air dispersion plate 38c is a thin and long metal plate bent so as to have a trapezoidal cross section (Fig. 4), and is attached to the center of the bottom wall surface of the housing 6 so as to extend in the longitudinal direction. The oxidant-gas discharge passage 18 connected to the bottom wall surface of the housing 6 communicates with a space with a trapezoidal cross section surrounded by the remaining air dispersion plate 38c and the bottom wall surface of the housing 6. Also, inclined surfaces on both sides of the remaining air dispersion plate 38c have multiple pores. The remaining air flowing into the space with the trapezoidal cross section from the oxidant-gas discharge passage 18 is ejected from the pores into the housing 6 and is dispersed.

As illustrated in Figs. 3 and 6, the ceramic heater 34 is attached to a side wall surface of the housing 6. A distal end portion of the ceramic heater 34 extends to the center of the joint portion with the remaining fuel-gas distribution pipe 38b. On activation of the fuel cell module 1, the remaining fuel gas is ejected from the pores of the remaining fuel-gas distribution pipe 38b, and the ceramic heater 34 is energized while the remaining air is ejected from the pores of the remaining air dispersion plate 38c. Thus, the remaining fuel gas being ejected can be ignited. Accordingly, the reformer 36 arranged above the combustor 38 in the housing 6 can be heated. (Note that since the temperature of the reformer 36 has not risen on activation of the fuel cell module 1, a reforming reaction does not occur in the reformer 36, or electricity is not generated by the fuel cell stack 2.)

### Configuration of Oxidant-gas Heat Exchanger

An oxidant-gas heat exchanger included in the reformer heater 4b is described below with reference to Figs. 3 and 4.

As illustrated in Figs. 3 and 4, a portion of wall surfaces of the housing 6 has a double-wall structure. The air for electricity generation flows inside the double wall, and hence the air flowing in the double wall is heated with the combustion gas generated by the combustor 38. That is, a portion of the upper surface, a portion of the side wall surfaces in the longitudinal direction, and a portion of the bottom wall surface of the housing 6 are formed of two metal plates of an inner wall plate 6a and an outer wall plate 6b. A heat transfer fin 40 is arranged between the inner wall plate 6a and the outer wall plate 6b. Heat of the inner wall plate 6a is efficiently transmitted to the space between the inner wall plate 6a and the outer wall plate 6b. Thus, the inner wall plate 6a, the outer wall plate 6b, and the heat transfer fin 40 function as an oxidant-gas heat exchanger that heats the air which is the supplied oxidant gas with the combustion gas generated by the combustor 38 and supplies the heated air to the fuel cell stack 2.

The air supplied from the air supply pipe 32 flows into the space between the inner wall plate 6a and the outer wall plate 6b that define the upper wall surface of the housing 6 (Fig. 3). The air is spread in the transverse direction of the housing 6 from the inflow position, and flows into the space between the inner wall plate 6a and the outer wall plate 6b that define side wall surfaces of the housing 6 (Fig. 4). The air flowing into the side wall surfaces of the housing 6 flows downward, and flows into the space between the inner wall plate 6a and the outer wall plate 6b that define the bottom wall surface of the housing 6. The air flowing into the bottom wall surface of the housing 6 passes through the oxidant-gas supply passage 16 (Fig. 3) connected to the center in the transverse direction of the bottom wall surface of the housing 6, and is supplied to the fuel cell stack 2. Thus, the portions of the upper wall surface, side wall surfaces, and bottom wall surface of the housing 6 function as the oxidant-gas heat exchanger, and the oxidant-gas heat exchanger is provided at these wall surfaces.

### Operation of Fuel Cell Module

An operation of the fuel cell module 1 according to the example of the invention is described below.

First, on activation of the fuel cell module 1, the raw fuel gas is supplied to the vaporizer 4a of the fluid supply device 4 via the raw-fuel-gas supply pipe 22, and the air for electricity generation is supplied to the reformer heater 4b of the fluid supply device 4 via the air supply pipe 32. As illustrated in Fig. 3, the supplied raw fuel gas passes through the vaporizing chamber 30a and the mixing chamber 30b of the vaporizer 4a, flows into the mixed-gas duct 28, and further flows into the reformer 36 of the reformer heater 4b. Since the temperature of the reformer 36 is low in an initial phase of activation of the fuel cell module 1, a reaction of reforming the raw fuel gas does not occur. The raw fuel gas flowing into the reformer 36 passes through the fuel supply passage 12 (Fig. 5), and is supplied into the fuel cell stack 2.

The air supplied to the reformer heater 4b via the air supply pipe 32 passes through the space between the inner wall plate 6a and the outer wall plate 6b of the housing 6, passes through the oxidant-gas supply passage 16 (Fig. 5), and flows into the fuel cell stack 2. The raw fuel gas and the air flowing into the fuel cell stack 2 pass through the inner passage, and are discharged to the reformer heater 4b respectively via the fuel discharge passage 14 and the oxidant-gas discharge passage 18. Since the temperature of the fuel cell stack 2 is low in an initial phase of activation of the fuel cell module 1, an electricity-generating reaction does not occur in the fuel cell stack 2.

The raw fuel gas passing through the fuel discharge passage 14 and flowing into the reformer heater 4b passes through the remaining fuel-gas manifold 38a of the combustor 38, flows into the remaining fuel-gas distribution pipe 38b, and is ejected from the pores of the remaining fuel-gas distribution pipe 38b. The air passing through the oxidant-gas discharge passage 18 and discharged to the reformer heater 4b flows into the remaining air dispersion plate 38c and is ejected from the pores of the remaining air dispersion plate 38c. Also, on activation of the fuel cell module 1, the ceramic heater 34 is energized, and the raw fuel gas ejected from the pores of the remaining fuel-gas distribution pipe 38b is ignited by the heat of the ceramic heater 34. Thus, the combustor 38 generates combustion heat.

When the combustor 38 is ignited, the reformer 36 arranged above the combustor 38 is heated, and the temperature of the reforming catalyst 36a in the reformer 36 rises. Also, the oxidant-gas heat exchanger defined by the inner wall plate 6a and the outer wall plate 6b of the housing 6 is heated with the combustion gas generated by the combustion, and the air flowing in the oxidant-gas heat exchanger is heated. The heated air flows into the fuel cell stack 2. The fuel cell stack 2 is heated with the heat. In this case, since the housing 6 of the fluid supply device 4 is surrounded by the heat insulating material 8, the fuel cell stack 2 is almost not heated with the radiation heat or the like from the housing 6, and is substantially heated only with a fluid (air and fuel gas) supplied from the fluid supply device 4.

The combustion gas generated in the housing 6 passes as exhaust gas through the exhaust-gas pipe 26 and flows into the vaporizer 4a. The exhaust gas flowing into the vaporizer 4a passes through the exhaust-gas chamber 30c and is discharged from the exhaust-gas discharge pipe 24. At this time, the vaporizing chamber 30a provided above the exhaust-gas chamber 30c is heated. In this way, the water supplied to the vaporizer 4a is heated with the combustion gas generated by the combustor 38 and supplied via the exhaust-gas pipe 26. After the temperature of the vaporizing chamber 30a rises, the supply with the water from the water supply pipe 20 is started, and the water vapor is generated in the vaporizing chamber 30a. On activation of the fuel cell module 1, the electric heater 29 may be energized to supplementarily heat the vaporizing chamber 30a.

When the water vapor is generated in the vaporizing chamber 30a, the mixed gas of the raw fuel gas and the water vapor is supplied to the reformer 36. When the temperature of the reformer 36 sufficiently rises, a steam reforming reaction is induced by the reforming catalyst 36a, and the fuel gas rich in hydrogen gas is generated from the raw fuel gas. The generated fuel gas is supplied to the fuel cell stack 2. When the temperature of the fuel cell stack 2 sufficiently rises, an electricity-generating reaction occurs by the fuel gas and the air heated by the reformer heater 4b. In a state in which the temperature of the fuel cell stack 2 rises to a temperature suitable for electricity generation, electric power is obtained from the fuel cell stack 2 via the bus bars 2b, and thus electricity generation is started. Advantageous Effect Attained by Fuel Cell Module According to Embodiment of Invention

With the fuel cell module 1 according to the embodiment of the invention, the fuel cell stack 2 is arranged outside the metal housing 6 independently from the housing 6 (Fig. 2). With the arrangement, the fuel cell stack 2 substantially receives heat only via the fluid flowing between the fuel cell stack 2 and the housing 6. Thus, temperature unevenness does not occur in the fuel cell stack 2 due to the radiation heat or the like radiated from the combustor 38 or the like. Since the fuel cell stack 2 is substantially heated only via the fluid, the temperature distribution of the fuel cell stack 2 is determined by the temperature and flow rate of the fluid to be supplied. The temperature distribution of the fuel cell stack 2 is not affected by a change in arrangement of the reformer 36, the combustor 38, and other member in the housing 6. Thus, the reformer 36, the combustor 38, and other member in the housing 6 can be designed independently from the fuel cell stack 2. The degree of freedom of design for the reformer 36, the combustor 38, and other member can be increased. Since the housing 6 housing the reformer 36, the combustor 38, and other member is independent from the fuel cell stack 2, a single model of housing can be widely used for any of various fuel cell stacks, and the manufacturing cost can be decreased by mass production.

With the fuel cell module 1 according to this embodiment, since the fuel cell stack 2 is provided separately from the housing 6, the heat which may be directly transmitted from the housing 6 to the fuel cell stack 2 by heat transfer can be reduced. Thus, the influence of a change in arrangement of the reformer 36, the combustor 38, and other member in the housing 6 given to the temperature distribution of the fuel cell stack 2 can be further reduced.

With the fuel cell module 1 according to this embodiment, since the heat insulating material 8 is arranged in the space between the fuel cell stack 2 and the housing 6, the heat which may be directly transmitted between the housing 6 and the fuel cell stack 2 can be further reduced. Thus, the influence of a change in arrangement of the reformer 36, the combustor 38, and other member in the housing 6 given to the temperature distribution of the fuel cell stack 2 can be further reduced.

With the fuel cell module 1 according to this embodiment, since the fuel cell stack 2 is arranged to face a surface of the housing 6, even when the heat is directly transmitted from the housing 6 to the fuel cell stack 2, temperature unevenness unlikely occurs in the fuel cell stack 2, and an adverse effect due to the heat received from the housing 6 can be further reduced.

With the fuel cell module 1 according to this embodiment, since the heat insulating material 8 is provided to surround each of the fuel cell stack 2 and the housing 6, the fuel cell stack 2 and the housing 6 are completely thermally isolated from each other by the heat insulating material 8. Accordingly, heat transfer can be completely blocked except for an inflow of heat due to gas passing through a corresponding passage penetrating through the heat insulating material 8.

With the fuel cell module 1 according to this embodiment, since the fuel cell stack 2 and the housing 6 are arranged next to each other in the vertical direction, even when the heat in the housing 6 leaks through the heat insulating material 8, heating only one side of the fuel cell stack 2 is avoided, and the temperature distribution of the fuel cell stack 2 can be further uniform.

With the fuel cell module 1 according to this embodiment, since the housing 6 with a relatively small weight is arranged above the fuel cell stack 2 with a relatively large weight, the fuel cell module 1 is more stable and the upper device can be easily supported as compared with a case where the fuel cell stack 2 is arranged above the housing 6.

With the fuel cell module 1 according to this embodiment, since the fuel supply passage 12 and the fuel discharge passage 14 extend in the space between the fuel cell stack 2 and the housing 6 (Fig. 1), the fuel supply passage 12 and the fuel discharge passage 14 can be provided without an increase in occupancy floor area. Even when the connection positions of the fuel supply passage 12 and the fuel discharge passage 14 to the fuel cell stack 2 differ from those to the housing 6 in top view, the passages can be connected by bending the passages in the space between the fuel cell stack 2 and the housing 6. Thus, any of various fuel cell stacks 2 with different dimensions and shapes can be connected to a single model of housing 6.

With the fuel cell module 1 according to the above-described embodiment, while the fuel supply passage 12 and the fuel discharge passage 14 extend in the space between the fuel cell stack 2 and the housing 6, one of the passages may extend from a side surface of the fuel cell stack 2 or the housing 6. Alternatively, the fuel supply passage 12 and the fuel discharge passage 14 may extend from one side or one surface of the housing 6.

With the fuel cell module 1 according to this embodiment, since the housing 6 is coupled to the fuel cell stack 2 only by the fuel supply passage 12, the fuel discharge passage 14, the oxidant-gas supply passage 16, and the oxidant-gas discharge passage 18 (Fig. 2), a dedicated support member for supporting the housing 6 is not required, and heat transfer between the fuel cell stack 2 and the housing 6 via the support member can be prevented. Since a fluid flows in a corresponding passage, the temperature of the passage substantially depends on the temperature of the fluid flowing therein. Hence, dissipation of heat via the passage by heat transfer can be restricted.

With the fuel cell module 1 according to this embodiment, since the fuel supply passage 12, the fuel discharge passage 14, the oxidant-gas supply passage 16, and the oxidant-gas discharge passage 18 are removably coupled (Fig. 2), when one of the housing 6 and the fuel cell stack 2 has a problem, maintenance or replacement of the one with a problem can be independently performed.

With the fuel cell module 1 according to this embodiment, the fuel cell stack 2 is the flat-plate cell stack in which the plurality of flat-plate fuel cells 2a are stacked. The fuel cell stack 2 has a hermetically sealed structure, and has formed therein flow paths through which the fuel gas and the oxidant gas flow. Hence, merely by connecting the flow paths with the passages, a fluid can be easily supplied to and discharged from the housing 6. Thus, the structure of the fuel cell module 1 can be simplified.

While the preferred embodiment of the invention has been described above, various modifications can be made for the above-described embodiment. In particular, while the reformer and the combustor are housed in the housing and the vaporizer is arranged outside the housing, the vaporizer may be housed in the housing. The invention can be configured such that a desulfurizer that removes a sulfur component contained in raw fuel gas, and a combustion catalyst that removes carbon monoxide or the like contained in exhaust gas may be housed in the housing. While the oxidant-gas heat exchanger is integrated with the outer wall surface of the housing according to the above-described embodiment, the invention can be configured such that the oxidant-gas heat exchanger is housed in the housing. While the housing is arranged above the fuel cell stack according to the above-described embodiment, the housing may be arranged below the fuel cell stack, or the housing may be arranged beside the fuel cell stack.

## Claims

1. A fuel cell module (1) that generates electricity by a reaction of supplied fuel gas and oxidant gas, comprising:
a fuel cell stack (2) including a plurality of fuel cells (2a);
a reformer (36) that generates fuel gas containing hydrogen by reforming raw fuel gas, and that supplies the fuel gas to the fuel cell stack;
a combustor (38) that combusts remaining fuel gas which has not been used for generating electricity and which has remained in the fuel cell stack, and thereby that heats the reformer; and
a housing (6) having formed therein a space that houses the reformer and the combustor,
wherein the fuel cell stack is arranged outside the housing independently from the housing.

2. The fuel cell module according to Claim 1, wherein the fuel cell stack is provided separately from the housing.

3. The fuel cell module according to Claim 1 or 2, wherein the fuel cell stack and the housing are connected to each other by using a fuel supply passage (12) through which the fuel gas reformed by the reformer is supplied to the fuel cell stack, and a fuel discharge passage (14) through which the remaining fuel gas which has not been used for generating electricity and which has remained in the fuel cell stack is discharged to the combustor.

4. The fuel cell module according to Claim 3, wherein the fuel supply passage and the fuel discharge passage are defined by pipes.

5. The fuel cell module according to any one of Claims 1 to 4, wherein a heat insulating material (8) that thermally isolates the fuel cell stack from the housing is arranged in a space between the fuel cell stack and the housing.

6. The fuel cell module according to Claim 5,
wherein the heat insulating material is provided so as to surround each of the fuel cell stack and the housing, and
wherein the fuel supply passage and the fuel discharge passage penetrate through the heat insulating material and extend between the fuel cell stack and the housing.

7. The fuel cell module according to any one of Claims 1 to 6, wherein the fuel cell stack is arranged to face a surface of the housing.

8. The fuel cell module according to any one of Claims 1 to 7, wherein the fuel cell stack and the housing are arranged next to each other in a vertical direction.

9. The fuel cell module according to Claim 8, wherein the housing is arranged above the fuel cell stack.

10. The fuel cell module according to according to any one of Claims 3 to 9, wherein the fuel supply passage and the fuel discharge passage extend in a space between the fuel cell stack and the housing arranged next to each other.

11. The fuel cell module according to according to any one of Claims 3 to 10, further comprising:
an oxidant-gas supply passage (16) through which oxidant gas is supplied to the fuel cell stack; and
an oxidant-gas discharge passage (18) through which oxidant gas which has not been used for generating electricity and which has remained in the fuel cell stack is discharged to the housing,
wherein the housing is coupled to the fuel cell stack by using only the fuel supply passage, the fuel discharge passage, the oxidant-gas supply passage, and the oxidant-gas discharge passage.

12. The fuel cell module according to Claim 11, wherein at least one of the fuel supply passage, the fuel discharge passage, the oxidant-gas supply passage, and the oxidant-gas discharge passage is removably coupled to the housing or the fuel cell stack.

13. The fuel cell module according to any one of Claims 1 to 12, wherein the fuel cell stack is a flat-plate cell stack in which a plurality of flat-plate fuel cells are stacked.

14. A fluid supply device (4) for supplying fuel gas obtained by reforming raw fuel gas and heated oxidant gas for electricity generation to a fuel cell stack (2), comprising:
a reformer (36) that generates fuel gas containing hydrogen by reforming raw fuel gas;
a combustor (38) that combusts remaining fuel gas which has not been used for generating electricity and which has remained in the fuel cell stack, and thereby that heats the reformer;
a housing (6) having formed therein a hermetically sealed space that houses the reformer and the combustor; and
a heat insulating material (8) that thermally isolates the fuel cell stack from the housing,
wherein the fuel gas generated by the reformer is supplied to the fuel cell stack via a fuel supply passage (12) extending across the heat insulating material, and the remaining fuel gas is discharged to the housing via a fuel discharge passage (14) extending across the heat insulating material.

15. The fluid supply device according to Claim 14, wherein the fuel supply passage and the fuel discharge passage are connected to one side of the housing.
